# EUROPÄISCHE PATENTSCHRIFT

(11) **EP 4 043 274 B1**
(45) Veröffentlichungstag und Bekanntmachung des Hinweises auf die Patenterteilung: **13.09.2023**
(21) Anmeldenummer: 22154754.0
(22) Anmeldetag: 02.02.2022
(51) Int. Cl.: B60L 53/31, B62H 3/02, B62H 5/00

(54) **SYSTEM ZUM SICHERN UND LADEN VON ELEKTRISCH BETRIEBENEN ZWEIRÄDERN WIE E-BIKES, E-SCOOTERN U.DGL. UND VERFAHREN MIT DIESEM SYSTEM**
SYSTEM FOR SECURING AND CHARGING ELECTRICALLY OPERATED TWO-WHEELED VEHICLES SUCH AS E-BIKES, E-SCOOTERS AND THE LIKE AND METHOD WITH THIS SYSTEM
SYSTÈME DE FIXATION ET DE CHARGE DES DEUX ROUES ÉLECTRIQUES TELS QUE LES VÉLOS ÉLECTRIQUES, LES SCOOTER ÉLECTRIQUES ET ANALOGUES ET PROCÉDÉ ASSOCIÉ AUDIT SYSTÈME

(30) Priorität: 10.02.2021 DE 102021103125
(43) Veröffentlichungstag der Anmeldung: 17.08.2022
(73) Patentinhaber: HB Reavis Germany GmbH, 10719 Berlin (DE)
(72) Erfinder: Heider, Patrick, 10555 Berlin (DE); Fuchs, Oliver, 12209 Berlin (DE); Papenfuss, Andreas, 99425 Weimar (DE)
(74) Vertreter: Buse, Mentzel, Ludewig Patentanwaltskanzlei

(56) Entgegenhaltungen:
- WO-A1-2009/129623
- DE-A1- 4 315 440
- DE-A1-102012 110 913
- DE-A1-102019 117 065
- DE-U1-202019 003 930

## Beschreibung

Die Erfindung betrifft ein System zu Sichern und Laden von elektrisch betriebenen Zweirädern wie E-Bikes, Elektrofahrädern, Pedelecs, elektrisch angetriebenen Motorrollern, E-Rollern, E-Scootern u. dgl., im Weiteren Zweiräder genannt, gemäß dem Oberbegriff des Anspruchs 1 sowie ein mit diesem System durchführbares Verfahren gemäß Anspruch 11.

In der DE 20 2012 104 011 U1 ist eine Kombination einer Abstellanlage und Ladestation für Elektrofahrräder und elektrisch angetriebene Motorroller beschrieben. Hierbei sind an einer Traverse mehrere nebeneinander angeordnete Stellplätze für Zweiradfahrzeuge vorgesehen. Die hier beschriebene Vorrichtung weist keine Sicherungselemente für die Sicherung der Zweiradfahrzeuge gegen Diebstahl auf. Dadurch, dass die Stellplätze direkt nebeneinander angeordnet sind, muss sich eine Bedienperson, wenn die benachbarten Stellplätze ebenfalls belegt sind, an den anderen Zweiradfahrzeugen vorbei zwängen, um Zugriff auf die Ladeboxen zu erhalten oder dar von einer Bedienperson selbst mitgebrachte Schloss, mit dem das Zweiradfahrzeug an der Traverse oder dem Anlehnelement gesichert wurde, zu lösen.

Die DE 20 2017 003 234 U1 beischreibt eine Ladestation zum Laden von Akkumulatoren von e-Bikes und/oder Elektroautos. Hierzu sind Ladefächer vorgesehen, in die die Akkumulatoren verbracht und aufgeladen werden können. Weiterhin sind auch Anschlüsse für Ladekabel von E-Bikes oder Elektroautos vorgesehen. Des Weiteren ist eine Fahrradständereinheit mit mehreren nebeneinander angeordneten Bügeln, die je einen Aufnahmespalt für einen Teil eines Reifens eines E-Bikes aufweisen, vorgesehen. Im Bereich des Fahrradständers kann auch eine Fahrradschließeinrichtung vorgesehen sein, die den Reifen des E-Bikes an dem Fahrradständer sichert. Der Aufbau dieser Fahrradschließeinrichtung ist aus dem Dokument nicht ersichtlich. Es ist auch nur die Sicherung eines Reifens - meist des Vorderreifens - vorgesehen. Dieser ist normalerweise recht einfach vom Rahmen und dem restlichen E-Bike lösbar, so dass kein Diebstahlschutz für den Rahmen des E-Bikes, der üblicherweise auch den Motor, ggf. den Akkumulator und weitere wichtige Bauteile beinhaltet, besteht. Außerdem ist es nachteilig, dass die Fahrradständer alle nebeneinander angeordnet sind, da eine Bedienperson, die auf die Ladestation zugreifen möchte, bei gut ausgelastetem Fahrradständer sich zwischen den E-Bikes hindurchzwängen muss, um das eigene E-Bike zu sichern bzw. wieder zu entsichern und um Zugriff auf den Ladeschrank zu haben.

In der DE 10 2019 117 065 A1 ist eine Außenbeleuchtungsvorrichtung beschrieben, die eine Verriegelungsvorrichtung für ein Fahrzeug umfasst, um das Fahrzeug gegen Diebstahl zu sichern. Es ist auch möglich, Ladeanschlüsse für Fahrzeuge mit Elektroantrieb vorzusehen. Die Vorrichtungen sind jedoch nicht miteinander vernetzt und eine Bedienperson muss ggf. suchen, ob und wenn ja welche Vorrichtungen frei sind, wenn ein Zweirad gesichert werden soll.

Die FR 2 770 194 beschreibt eine Säule zur Sicherung eines Zweirads. Das Zweirad wird mittels eines Stahlseils und durch Eingabe eines vierstelligen Codes gesichert. Hier ist es zwar vorgesehen, dass mehrere Säulen durch ein zentrales Alarmsystem miteinander verbunden sind, jedoch ist dieses nur dafür zuständig, dass ein Diebstahl oder eine Manipulation der Vorrichtung entdeckt werden, nicht für die Zuweisung und Personalisierung einer einzelnen Vorrichtung.

In Dokument DE 10 2012 110 913 A1 wird eine Ladestation für Elektroräder und andere Gegenstände mit Akkumulator beschrieben an der die Gegenstände auch mittels eines Schlosses gesichert werden können. Es kann eine Elektronikeinheit vorgesehen sein, die zum Austausch von Zahlungsinformationen dienen kann und dann nach Zahlungseingang das Schloss entriegelt. Die Elektronikeinheit kann auch mit einem externen Datengerät einer Bedienperson kommunizieren und so einen Schließcode an eine Bedienperson übermitteln. Eine Personalisierung der einzelnen Ladestationen ist hier ebenfalls nicht vorgesehen.

Aufgabe der Erfindung ist es daher, die vorerwähnten Nachteile zu vermeiden und ein System zum Sichern und Laden von elektrisch betriebenen Zweirädern aller Art zu schaffen, welches mehrere Vorrichtungen zum Abstellen aufweist und diese gemeinsam so verwaltet, dass es für eine Bedienperson bequem zugänglich und leicht und einfach bedienbar ist. Weiterhin ist es Aufgabe der Erfindung ein Verfahren zu schaffen, mittels welchem das System auf komfortable Art und Weise bedienbar ist. Diese Aufgaben werden durch die kennzeichnenden Merkmale des Anspruchs 1 und durch Anspruch 11 gelöst, denen folgende besondere Bedeutung zukommt.

Das erfindungsgemäße System umfasst ein Bedienpanel sowie eine Mehrzahl von Vorrichtungen, an denen ein elektrisch betriebenes Zweirad gesichert und geladen werden kann. Die Vorrichtungen umfassen einen Anlehnbereich für ein Zweirad. Des Weiteren ist eine Sicherungseinrichtung zur Sicherung des Zweirads vorgesehen. Diese ist als längliches Element ausgeführt und, solange sie nicht in Benutzung ist, in der Vorrichtung angeordnet. Das eine Ende der Sicherungseinrichtung kann aus der Vorrichtung herausgezogen werden, um das Zweirad damit zu sichern. Das andere Ende der Sicherungseinrichtung ist in der Vorrichtung unlösbar festgelegt. Außerdem ist noch ein Verschlusselement vorgesehen, welches an der Vorrichtung angeordnet ist. Um ein Zweirad zu sichern, wird es dann an den Anlehnbereich gelehnt und das eine Ende der Sicherungseinrichtung ergriffen. Die Sicherungseinrichtung lässt sich aus der Vorrichtung herausziehen und kann dann durch verschiedene Teile des Zweirads geführt werden, z.B. durch die Speichen, die Räder, den Rahmen usw. Da die Sicherungseinrichtung im Vergleich zu üblichen Fahrradschlössern recht lang ist, kann diese beispielsweise durch beide Räder des Zweirads geführt werden, so dass durch einfach Demontage des Vorderrads ein potentieller Dieb nicht einfach einen Teil des Zweirads entwenden kann. Wenn die Sicherungseinrichtung in gewünschter Weise um bzw. durch Teile des Zweirads geführt wurde, wird das eine Ende in das Verschlusselement gesteckt und dort festgelegt. Da das andere Ende der Sicherungseinrichtung unlösbar in der Vorrichtung befestigt ist, kann es nicht herausgezogen werden und das Zweirad ist gegen Diebstahl gesichert.

Als Sicherungseinrichtung kann beispielsweise ein Stahlseil dienen, welches mit einem Kunststoff, Gummi oder einem textilen Material ummantelt ist.

Weiterhin ist die Ver- und Entriegelung des Verschlusselements elektronisch vorgesehen. Dies ist sicher und insbesondere besonders vorteilhaft, da eine Vielzahl an Vorrichtungen vorgesehen ist, die zentral verwaltet werden. Die Ver- und Entriegelung erfolgt dann ebenfalls über das Bedienpanel, so dass die Bedienperson Zeit spart, wenn sie ihr Zweirad sichern oder wieder mitnehmen möchte, da kein Code o.ä. eingegeben werden muss.

Über das Bedienpanel wird die Mehrzahl an Vorrichtungen verwaltet und einer Bedienperson zugeordnet. Bei der Zuordnung einer Vorrichtung an eine Bedienperson wird die Vorrichtung für die Bedienperson personalisiert und freigeschaltet und das Verschlusselement wird in seine Freigabelage verbracht, damit eine Sicherung eines Zweirads durch eine Bedienperson erfolgen kann. Beim Einbringen des Elements der Sicherungseinrichtung in das Verschlusselement, wird dann ein Schalter betätigt, der das Verschlusselement in seine Sicherungslage bringt. Hierdurch wird einer Bedienperson sehr komfortabel eine Möglichkeit gegeben, ein Zweirad abzustellen und zu sichern und bei Bedarf auch zu laden.

Bevorzugterweise erfolgt die Personalisierung der einzelnen Vorrichtung für eine Bedienperson mittels eines Identifikationsgebers, nämlich eines elektronischen Geräts wie einem Handy, Smartphone, Notebook, Tablet, o.ä. oder durch eine Magnet- oder Chipkarte oder durch einen Transponder. Ein solcher Gegenstand wird von einer Bedienperson entweder oft sowieso mitgeführt oder ist klein und einfach mitzuführen.

In einem bevorzugten Ausführungsbeispiel wird die Sicherungseinrichtung automatisch in die Vorrichtung gezogen, wenn sie nicht von außen mit einer Kraft beaufschlagt wird. Hierdurch ist die Sicherungseinrichtung immer ordentlich in der Vorrichtung verstaut und kann sich nicht verheddern. Auch können Beschädigungen verhindert werden und eine herum liegende Sicherungseinrichtung könnte eine Stolperfalle darstellen. Dieser Effekt könnte beispielsweise durch ein an einer Umlenkrolle befindliches Gewicht verwirklicht werden. Die Sicherungseinrichtung kann um die Umlenkrolle geführt werden, welche dann in einer nach unten weisenden Schlaufe der Sicherungseinrichtung angeordnet ist. Durch das an der Umlenkrolle befindliche Gewicht, wird diese nach unten gezogen und die Sicherungseinrichtung hat somit das Bestreben in die Vorrichtung hinein zu fahren. An dem einen Ende der Sicherungseinrichtung ist dann ein Anschlag vorgesehen, damit dieses von außen sichtbar bleibt und von einer Bedienperson verwendet werden kann. Die Verwendung der Umlenkrolle und des Gewichts ist einfach und kostengünstig in der Herstellung und dazu nahezu wartungsfrei. Selbstverständlich können auch andere Alternativen verwendet werden, um die Sicherungseinrichtung in das Gehäuse oder die Vorrichtung zu bringen, beispielsweise federbelastete Rollen, auf die das Sicherungselement aufgewickelt werden kann, eine Zugfeder, die das Sicherungselement in die Vorrichtung zieht o.ä.

In einem weiteren bevorzugten Ausführungsbeispiel ist eine Signaleinrichtung wie eine Signalleuchte an der Vorrichtung vorgesehen. Diese kann beispielsweise anzeigen, welche Vorrichtung einer Bedienperson zugeordnet wurde, ob die Sicherungseinrichtung korrekt in das Verschlusselement eingebracht wurde und der Schließvorgang durchgeführt wurde, ob das Sicherungselement in seine Freigabelage verbracht wurde u.ä. Weiterhin kann die Signalleuchte Informationen zum Akkustand des Zweirads anzeigen. Die Signalleuchte kann dabei über nur eine Farbe verfügen, z.B. weiß oder orange, oder auch über mehrere, z.B. grün für frei und rot für besetzt. Hier sind alle denkbaren Farben und Farbkombinationen möglich. Darüber hinaus kann die Signalleuchte dauerhaft leuchten oder auch blinken bzw. auch verschiedene Blinkmuster abgeben, um unterschiedliche Situationen darzustellen.

Als Ladeanschluss kann eine haushaltsübliche Steckdose vorgesehen sein. Bei modernen elektrisch betriebenen Zweirädern ist häufig der Akku nicht mehr zum Laden entnehmbar, sondern es ist ein Ladekabel vorgesehen, welches genau zu dem Anschluss, welcher am Zweirad befindlich ist, passt. Auf der anderen Seite ist dann üblicherweise ein haushaltsüblicher Stecker vorgesehen. Derartige Ladekabel werden für die verschiedenen Modelle und Varianten von Zweirädern angeboten und die Inhaber solcher Fahrzeuge verfügen dann auch über das passende Ladekabel.

Wenn man den Anlehnbereich zumindest bereichsweise aus einem weichen Material vorsieht, können Kratzer und Beschädigungen an dem Zweirad verhindert werden. Ist das Material des Anlehnbereichs darüber hinaus noch durchgefärbt ausgeführt, kann man auch Kratzer, die im Anlehnbereich selbst evtl. entstehen, nicht so einfach sehen und es bleibt länger ein guter optische Gesamteindruck.

Die Vorrichtung kann einen Rahmen umfassen und einen den Rahmen zumindest bereichsweise umgebendes Gehäuse, wobei dann an der Außenseite des Gehäuses der Anlehnbereich für das Zweirad angeordnet ist. Im Rahmen, insbesondere in dessen Fußbereich, kann wenigstens eine Ausnehmung vorgesehen sein, durch welche elektrische Leitungen führbar sind. Hierdurch können die Leitungen, die für die Stromversorgung des Ladeanschlusses und der Signalleuchte oder auch für die Steuerung der Vorrichtung notwendig sind, gut und sauber innerhalb des Rahmens und der Vorrichtung geführt werden. Weiterhin ist es möglich, mehrere Vorrichtungen quasi in Reihe zu schalten und die Leitungen in Fußbereich des Rahmens aus der Vorrichtung heraus und in die nächste Vorrichtung herein zu führen.

Wird die Vorrichtung frei stehend angeordnet, können pro Vorrichtung zwei Zweiräder gesichert und geladen werden, jeweils an gegenüberliegenden Seiten. Dann sind die zu der Vorrichtung gehörenden Bauteile, wie Ladeanschluss, Sicherungseinrichtung etc. gegengleich zueinander angeordnet. In diesem Fall können alle Bauteile identisch zueinander ausgebildet werden, was kostengünstiger in der Herstellung und Lagerhaltung ist. Wird je eine Umlenkrolle mit Gewicht für jede der Sicherungseinrichtungen vorgesehen, so behindern diese sich gegenseitig nicht. Alternativ ist es auch möglich eine erfindungsgemäße Vorrichtung an einer Wand eines Raumes vorzusehen. Dann ist diese nur für ein Zweirad ausgelegt.

Da in dem erfindungsgemäßen System eine Vielzahl von Vorrichtungen vorgesehen ist, die beispielsweise in einem Fahrradparkhaus, einer Fahrradgarage, einem Fahrradkeller o.ä. angeordnet sind, ist es sinnvoll, die einzelnen Vorrichtungen mit einer Nummerierung oder Kennung zu versehen, um diese übersichtlicher oder besser auffindbar zu machen. Hierbei kann für eine Vorrichtung auf beiden Seiten die gleiche Nummerierung/Kennung verwendet werden oder auch pro Seite und damit pro Stellplatz eine eigene.

Ein weiterer Aspekt der Erfindung sieht ein Verfahren vor, welches mit dem erfindungsgemäßen System ausführbar ist. Hierzu zeigt die Anzeige am Bedienpanel freie und/oder verfügbare Vorrichtungen. Eine Bedienperson kann sich dann eine Vorrichtung aussuchen oder eine solche wird ihr automatisch zugewiesen. Mittels eines Identifikationsgebers kann die Bedienperson dann mit dem Bedienpanel interagieren bzw. kommunizieren. Die ausgewählte Vorrichtung wird dann für die Bedienperson freigeschaltet und auf die personalisiert. Die Bedienperson kann dann ein Zweirad an der ausgewählten Vorrichtung abstellen und sichern und ggf. auch einen Ladevorgang durchführen, wenn dies gewünscht und/oder erforderlich ist. Zum Sichern lehnt die Bedienperson das Zweirad im Anlehnbereich an, zieht das eine Ende der Sicherungseinrichtung aus der Vorrichtung heraus und führt es durch das Zweirad bzw. einzelne Bauteile hiervon. Dann wird das eine Ende des Sicherungselements in das Verschlusselement eingebracht wobei automatisch die Sicherungslage herbeigeführt wird. Für eine Bedienperson ist also die Nutzung des erfindungsgemäßen Systems sehr einfach und komfortabel und das Zweirad wird gut gesichert.

Will die Bedienperson das Zweirad wieder von der Vorrichtung entfernen, so wird zunächst eine Kommunikation zwischen dem Identifikationsgeber und dem Bedienpanel hergestellt. Danach werden die personenspezifischen Daten von der Vorrichtung gelöscht, die Vorrichtung wird entpersonalisiert und das Verschlusselement wird in die Freigabelage gebracht. Die Bedienperson kann dann die Sicherungseinrichtung aus dem Verschlusselement entfernen und das Zweirad mitnehmen.

Um das Verfahren für die Bedienperson zu vereinfachen und das System auch bei einer Vielzahl von Vorrichtungen übersichtlicher zu machen, kann an jeder Vorrichtung wenigstens eine Signalleuchte vorgesehen sein, die z.B. anzeigt, welche Vorrichtung dem Benutzer zugeordnet wurde, welche Vorrichtungen noch frei sind und/oder auch dass die Freigabelage bzw. die Sicherungslage des Verschlusselements herbeigeführt wurden. Diese Anzeigen können über verschiedene Farben oder Farbkombinationen, verschiedene Leuchtmuster (z.B. blinken/dauerhaft leuchten) oder auch akustisch erfolgen.

Üblicherweise kann ein großes Gebäude oder ein Gebäudekomplex wie ein großes Geschäftshaus, ein Wohnhaus mit vielen Parteien oder auch ein Hotel oder ein anderer Komplex über eine Fahrradgarage, ein Fahrradparkhaus o.ä., im Weiteren Fahrradparkhaus genannt, verfügen. Das System wird dabei bevorzugt im Inneren von Gebäuden eingesetzt, beispielsweise in einer solchen Fahrradgarage. Beim Einsatz einer bevorzugten Ausführungsform in einem Geschäftsgebäude könnte das Verfahren in etwa wie folgt durchgeführt werden:
- Die Bedienperson betritt die Fahrradgarage indem sie den Identifikationsgeber auf die Schnittstelle des der Zugangstür legt, die Zugangstür öffnet sich.
- Die Bedienperson fährt mit dem Zweirad in die Fahrradgarage hinein und hält vor dem Bedienpanel.
- Die Bedienperson legt ihren Identifikationsgeber auf die Schnittstelle am Bedienpanel.
- Die Anzeige auf dem Bedienpanel zeigt an, welche Vorrichtung der Bedienperson zugeordnet wird. Automatisch wird das in der Vorrichtung integrierte Verschlusselement entriegelt.
- Die Bedienperson begibt sich zu der zugewiesenen Vorrichtung, lehnt ihr Zweirad gegen den Anlehnbereich, zieht das Sicherungselement aus der Vorrichtung und führt das Sicherungselement um ihr Zweirad. Dann wird das eine Ende des Sicherungselements in das Verschlusselement geführt. Der Mechanismus verriegelt automatisch.
- Der Bedienperson kann, bei Bedarf, ihr Zweirad bzw. einen Akkumulator an dem in der Vorrichtung integrierten Ladeanschluss laden.

Das erfindungsgemäße System und das zugehörige Verfahren bieten sich insbesondere in Fahrradparkhäusern, Fahrradkellern und Fahrradgaragen an, kann aber auch draußen auf einem überdachten oder nicht überdachten Platz installiert sein.

Bevorzugt erhalten Bedienpersonen, die ein solches Fahrradparkhaus nutzen möchten, den Identifikationsgeber, wie eine Chip- oder Magnetkarte, einen RFID-Chip oder eine NFC-Einrichtung, eine App für ein elektronisches Gerät oder bekommen eine PIN zugewiesen oder werden mit Ihren biometrischen Daten in eine Datenbank gespeichert. Diese Identifikation wird vorteilhafterweise schon zum Zutritt zum Fahrradparkhaus benötigt, damit Unbefugte sich nicht an den abgestellten Zweirädern zu schaffen machen können. Mit der gleichen Identifikation meldet die Bedienperson sich dann am Bedienpanel an und bekommt eine Vorrichtung zum Abstellen, Sichern und Laden des Zweirads zugeordnet. Nach dem Abstellen wird das Zweirad mittels der Sicherungseinrichtung gesichert. Wenn die Bedienperson dann ihr Zweirad abholen möchte, kann sie mittels der Identifikation am Bedienpanel auf das Verschlusselement einwirken, welches das eine Ende der Sicherungseinrichtung frei gibt und damit auch das Zweirad wieder frei gegeben wird.

Weitere Vorteile und Ausführungsbeispiele ergeben sich aus den Unteransprüchen, der nachfolgenden Beschreibung und den Figuren. In den Figuren ist die Erfindung in einem Ausführungsbeispiel dargestellt. Es zeigen:
- Fig. 1:: eine erfindungsgemäße Vorrichtung perspektivisch von vorne,
- Fig. 2:: die Vorrichtung aus Fig. 1 mit Nummerierung,
- Fig. 3:: eine erfindungsgemäße Vorrichtung mit zwei Zweirädern,
- Fig. 4:: ein System mit mehreren erfindungsgemäßen Vorrichtungen und mehreren Zweirädern,
- Fig. 5:: den Innenaufbau und den Rahmen der erfindungsgemäßen Vorrichtung,
- Fig. 6:: eine Umlenkrolle mit Gewicht in Explosionsdarstellung,
- Fig. 7:: die Umlenkrolle auf Fig. 6, perspektivisch,
- Fig. 8:: den Rahmen der erfindungsgemäßen Vorrichtung,
- Fig. 9:: den Aufbau des Gehäuses,
- Fig. 10:: das Element an dem einen Ende der Sicherungseinrichtung,
- Fig. 11:: ein Beispiel für einen Schalter, der mit dem Element betätigbar ist,
- Fig. 12:: ein Beispiel für das Zusammenwirken des Elements mit dem Verschlusselement.

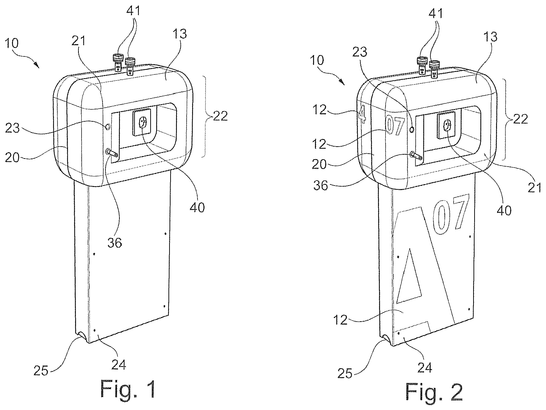

Die Fig. 1 und 2 zeigen eine erfindungsgemäße Vorrichtung 10 mit einem Gehäuse 20. An der Außenseite 21 des Gehäuses 20 ist der Anlehnbereich 22 vorgesehen, an den je ein Zweirad 11 angelehnt und dort abgestützt werden kann. Weiterhin erkennt man den Ladeanschluss 40, der hier als haushaltsübliche Steckdose ausgestaltet ist, und in den ein Ladekabel einbringbar ist, um den Akku eines Zweirads zu laden. Außerdem ist noch die Sicherungseinrichtung 30 vorgesehen, deren größter Teil sich im Inneren der Vorrichtung 10 befindet, deren eines Ende 31 jedoch aus dem Gehäuse 20 heraus ragt. Eine Bedienperson kann das eine Ende 31 der Sicherungseinrichtung 30 ergreifen, durch Teile seines Zweirads 11 führen und das eine Ende 31 in das Verschlusselement 23 hinein führen. Hierdurch wird das eine Ende 31 der Sicherungseinrichtung 30 in dem Verschlusselement 23 gesichert und das Zweirad 11 kann nicht entwendet werden. Zudem sind noch zwei Signalleuchten 41 in oberen Bereich des Gehäuses 20 vorgesehen, welche beispielsweise darauf hinweisen können, ob eine Vorrichtung 10 frei oder besetzt ist, ob das Verschlusselement 23 betätigt oder wieder frei gegeben wurde oder auch wie der Ladezustand des Akkus des Zweirads 11 ist.

In ihrem Fußbereich 24 weist die Vorrichtung 10 auf jeder Seite eine Ausnehmung 25 auf, durch die elektrische Leitungen führbar sind. In Fig. 2 ist zudem noch eine Nummerierung bzw. Kennung 12 vorgesehen, um eine Vielzahl von erfindungsgemäßen Vorrichtungen 10 besser zu verwalten bzw. zuzuordnen. Hierbei weisen die beiden Seiten der Vorrichtung 10, die zwei Stellplätze für je ein Zweirad 11 darstellen, unterschiedliche Kennungen 12 auf.

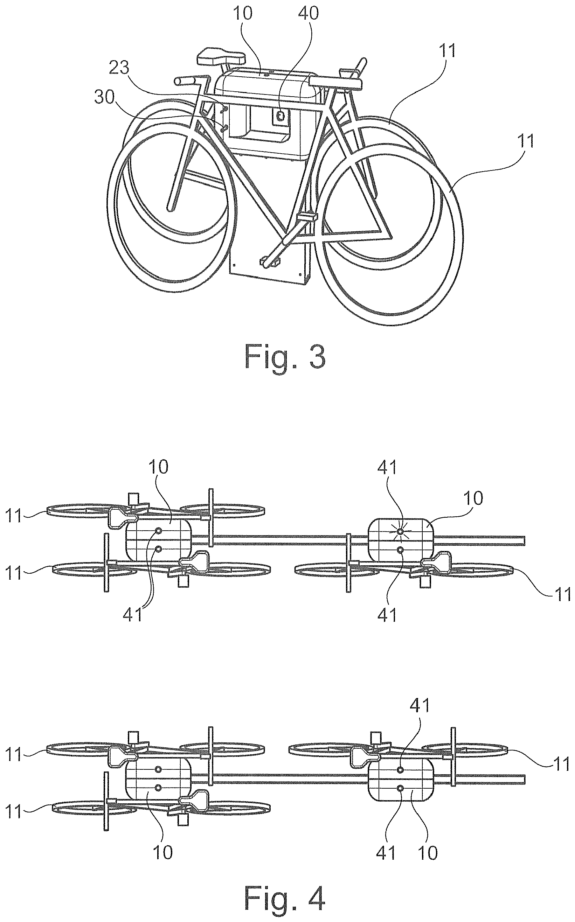

Die Fig. 3 und 4 zeigen, wie zwei Zweiräder 11 an einer Vorrichtung 10 angeordnet werden können bzw. wie mehrere erfindungsgemäße Vorrichtungen 10 zusammengeschlossen werden können, um beispielsweise ein Fahrradparkhaus zu bestücken. In Fig. 4 erkennt man einen Kabelkanal, durch den elektrische Leitungen von einer Vorrichtung 10 zur benachbarten geführt werden. Die Leitungen treten an der Ausnehmung 25 aus der Vorrichtung 10 aus, verlaufen durch den Kabelkanal und werden durch die Ausnehmung 25 an der nächsten Vorrichtung 10 dieser wieder zugeführt. So kann eine ganze Reihe von Vorrichtungen 10 mit elektrischer Energie zum Laden der Akkumulatoren aber auch zur Signalübertragung für elektronische Bauteile versorgt werden.

Symbolisch ist eine der Signalleuchten 41 dargestellt, die hier gerade einer Bedienperson eine spezifische freie Vorrichtung 10 zuweist. Die Bedienperson hat dabei zuvor im Bedienpanel eine freie Vorrichtung 10 angefragt. Die Signalleuchte 41 zeigt an, wo sich die freie Vorrichtung 10 befindet, damit sie von der Bedienperson schneller gefunden werden kann.

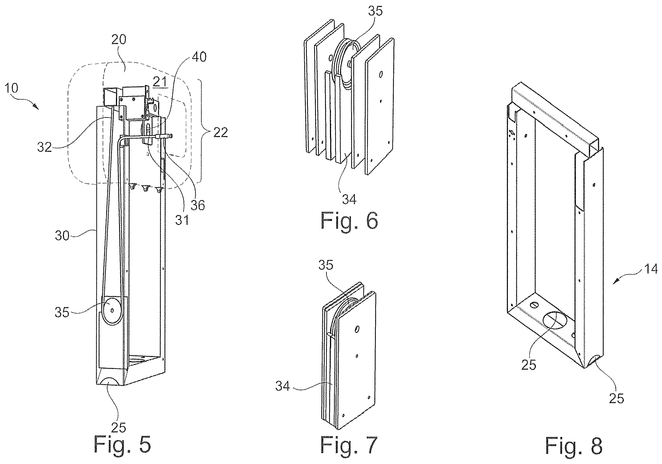

In den Fig. 5 bis 8 ist der innere Aufbau der Vorrichtung 10 näher ersichtlich. Man erkennt den Rahmen 14, der hier das tragende Element der Vorrichtung 10 darstellt. Des Weiteren ist der Verlauf der länglich ausgeformten Sicherungseinrichtung 30 ersichtlich. Mit ihrem einen Ende 31 ragt die Sicherungseinrichtung 30 aus dem Gehäuse 20 heraus und mit ihrem anderen Ende 32 ist die Sicherungseinrichtung 30 am Rahmen 14 unlösbar festgelegt. Im Verlauf der Sicherungseinrichtung 30 befindet sich die Umlenkrolle 35 mit dem Gewicht 34, welches von der natürlichen Gravitation nach unten gezogen wird. Hierdurch wird auch die Sicherungseinrichtung 30 nach unten und somit in die Vorrichtung 10 hinein gezogen, wenn sie nicht von außen mit einer Kraft beaufschlagt wird, wie beispielsweise, wenn eine Bedienperson an ihr zieht. Hierdurch wird die Sicherungseinrichtung 30 immer in die Vorrichtung 10 hinein verbracht bzw. gestrafft, um ein Verheddern zu verhindern.

Der Aufbau der Umlenkrolle 35 mit dem Gewicht 34 ergibt sich aus den Fig. 6 und 7. Die Umlenkrolle 35 und das Gewicht 34 sind dabei von Verkleidungen umschlossen. Die Sicherungseinrichtung 30 wird innerhalb der Verkleidung um die Umlenkrolle 35 geführt. Hierdurch wird verhindert, dass die Umlenkrolle 35 von der Sicherungseinrichtung 30 abrutschen kann.

Fig. 8 zeigt den Rahmen 24. Es sind zwei Ausnehmungen 25 erkennbar, eine im Fußbereich 24, um die elektrischen Leitungen zu einer nächsten erfindungsgemäßen Vorrichtung 10 zu führen und eine innerhalbe, um die elektrischen Leitungen IM Inneren der Vorrichtung 10 in Richtung des Ladeanschlusses 40 und der weiteren elektronischen Bauteile zu führen.

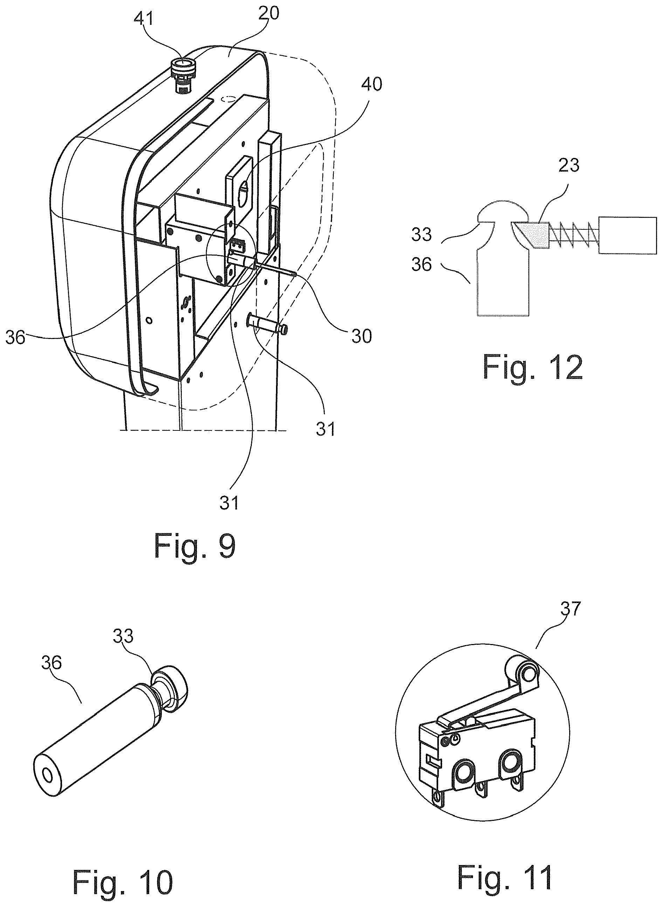

Schließlich zeigt Fig. 9 den inneren Aufbau des Gehäuses 20. Man erkennt den Element 36, der an dem einen Ende 31 der Sicherungseinrichtung 30 angeordnet ist. Dieser ragt im unteren Bereich der Fig. aus dem Gehäuse 20 heraus und kann von einer Bedienperson gegriffen werden. Im oberen Bereich des Gehäuses 20 ist die Situation dargestellt, dass das Element 36 in das Verschlusselement 23 eingebracht wurde. Die Sicherungseinrichtung 30 ist gegen ein Herausziehen gesichert. Der Element 36 ist nochmals näher in Fig. 10 gezeigt. Als Vorsprung 33, der mit dem Verschlusselement 23 zusammenwirkt, dient hier eine umlaufende Nut. Fig. 11 zeigt schließlich einen Schalter 37, welcher ausgelöst wird, wenn das Element 36 in das Verschlusselement 23 eingebracht wird und somit dafür sorgt, dass das Verschlusselement 23 das Element 36 zumindest bereichsweise um- oder hintergreift. Fig. 12 zeigt hierzu das Element 36 mit der umlaufenden Nut, die als Vorsprung 33 dient und das Verschlusselement 23, welches hier federbelastet ist. In der in Fig. 12 gezeigten Sicherungslage kann das Element 36 nicht herausgezogen werden, da das Verschlusselement 23 diese Bewegung sperrt. So ist das Zweirad 11 an de Vorrichtung 10 gesichert.

Abschließend sei noch darauf hingewiesen, dass die hier dargestellten Ausführungsformen lediglich beispielhafte Ausgestaltungen der Erfindung sind. Diese ist nicht darauf beschränkt. Es sind vielmehr noch Abänderungen und Abwandlungen möglich. Die Vorrichtung könnte von ihren Ausmaßen her deutlich größer ausgebildet werden. Dann können auch mehr als zwei Zweiräder gleichzeitig geladen und gesichert werden. Mehrere der erfindungsgemäßen Vorrichtungen könnten auch als Baugruppe zusammengeschlossen werden, um mehr Zweiräder gleichzeitig sichern und laden zu können. An der Vorrichtung können selbstverständlich auch nicht mit einem Elektromotor versehene bzw. angetriebene Zweiräder wie beispielsweise normale Fahrräder oder Roller gesichert werden. Diese brauchen dann natürlich auch nicht geladen zu werden.

### Bezugszeichenliste:

- 10: Vorrichtung
- 11: Zweirad
- 12: Kennung
- 13: Seite von 10
- 14: Rahmen
- 20: Gehäuse
- 21: Außenseite von 20
- 22: Anlehnbereich
- 23: Verschlusselement
- 24: Fußbereich von 14
- 25: Ausnehmung
- 30: Sicherungseinrichtung
- 31: Eines Ende von 30
- 32: Anderes Ende von 30
- 33: Vorsprung
- 34: Gewicht
- 35: Umlenkrolle
- 36: Element
- 37: Schalter
- 40: Ladeanschluss
- 41: Signalleuchte

## Patentansprüche

1. System zum Sichern und Laden von insbesondere elektrisch betriebenen Zweirädern (11) wie E-Bikes, E-Scootern u.dgl. mit einer Mehrzahl Vorrichtungen (10), welche zum Abstellen und Laden der elektrisch betriebenen Zweirädern (11) dienen können
wobei jede der Vorrichtungen (10) wenigstens einem Anlehnbereich (22) aufweist, an den das Zweirad (11) während dessen Verbleib angelehnt werden kann und mit mindestens einem Ladeanschluss (40) an jeder der Vorrichtungen (10), an der der Akkumulator des Zweirads (11) während dessen Verbleib an der Vorrichtung (10) aufladbar ist,
mit je mindestens einer Sicherungseinrichtung (30), die unlösbar an jeder der Vorrichtungen (10) angeordnet ist und die das Zweirad (11) gegen Diebstahl sichert, wobei die Sicherungseinrichtung (30) als länglich ausgeführtes Element in der Vorrichtung (10) angeordnet ist, solange sie nicht in Benutzung ist, wobei das eine Ende (31) der Sicherungseinrichtung (30) zum Sichern des Zweirads (11) aus der Vorrichtung (10) herausziehbar ist und das andere Ende (32) der Sicherungseinrichtung (30) in der Vorrichtung (10) unlösbar festgelegt ist wobei ein Verschlusselement (23) vorgesehen ist, in das das eine Ende (31) der Sicherungseinrichtung (30) einbringbar und dort sicherbar ist, nachdem die Sicherungseinrichtung (30) durch bzw. um das Zweirad (11) oder einzelne Bauteile des Zweirads (11) geführt wurde
wobei das Verschlusselement (23) über eine Freigabelage verfügt, in der das eine Ende (31) der Sicherungseinrichtung (30) in das Verschlusselement (23) einbringbar und/oder aus diesem entnehmbar ist, und über eine Sicherungslage, in welcher das eine Ende (31) der Sicherungseinrichtung (30) in dem Verschlusselement (23) gegen Entnahme gesichert ist,
wobei an dem einen Ende (31) der Sicherungseinrichtung (30) ein Element (36) mit einem Vorsprung (33) vorgesehen ist, welcher von dem Verschlusselement (23) um- oder hintergreifbar ist, um die Sicherungslage herbeizuführen und unter Zwischenschaltung des Vorsprungs (33) das Zweirad (11) an der Vorrichtung (10) zu sichern wobei das Verschlusselement (23) elektronisch ver- und/oder entriegelbar ist
und wobei ein gemeinsames Bedienpanel vorgesehen ist, um die Mehrzahl an Vorrichtungen (10) gemeinsam zu verwalten,
**dadurch gekennzeichnet,**
**dass** über das Bedienpanel eine einzelne Vorrichtung (10) einer Bedienperson zugeordnet und für diese frei schaltbar und personalisierbar ist,
**dass** dabei das Verschlusselement (23) dieser Vorrichtung (10) in seine Freigabelage verbracht wird
und **dass** das Element (36) bei Einbringen in das Verschlusselement (23) einen Schalter (37) betätigt und dadurch das Verschlusselement (23) in seine Sicherungslage bringt.

2. System nach Anspruch 1, **dadurch gekennzeichnet, dass** die Kommunikation mit dem Bedienpanel und/oder die Personalisierung einer einzelnen Vorrichtung (10) für eine Bedienperson mittels eines Identifikationsgebers, nämlich mittels eines elektronischen Gerätes, wie eines Handys, eines Smartphones, eines Tablets oder eines ähnlichen Gegenstandes oder mittels einer Magnet- oder Chipkarte oder mittels eines Transponders erfolgt.

3. System nach einem der Ansprüche 1 oder 2, **dadurch gekennzeichnet, dass** die Sicherungseinrichtung (30) automatisch in die Vorrichtung (10) gezogen wird, wenn sie nicht von außen mit einer Kraft beaufschlagt wird.

4. System nach Anspruch 3, **dadurch gekennzeichnet, dass** die Sicherungseinrichtung (30) mittels eines an einer Umlenkrolle (35) o.ä. befindlichen Gewichts (34) oder einer Feder in die Vorrichtung (10) gezogen wird.

5. System nach einem der Ansprüche 1 bis 4, **dadurch gekennzeichnet, dass** jede der Vorrichtungen (10) mindestens eine Signaleinrichtung wie eine Signalleuchte (41) aufweist, die Lichtsignale und/oder andere Signale absondern kann.

6. System nach einem der Ansprüche 1 bis 5, **dadurch gekennzeichnet, dass** als Ladeanschluss (40) an der Vorrichtung (10) eine haushaltsübliche Steckdose dient.

7. System nach einem der Ansprüche 1 bis 6, **dadurch gekennzeichnet, dass** der Anlehnbereich (22) der Vorrichtung (10) zumindest bereichsweise aus einem weichen Material besteht.

8. System nach einem der Ansprüche 1 bis 7, **dadurch gekennzeichnet, dass** die Vorrichtung (10) einen Rahmen (14) und ein den Rahmen (14) zumindest bereichsweise umgebendes Gehäuse (20) umfasst und dass im Rahmen (14), insbesondere in dessen Fußbereich (24), wenigstens eine Ausnehmung (25) vorgesehen ist, durch die elektrische Leitungen führbar sind.

9. System nach einem der Ansprüche 1 bis 8, **dadurch gekennzeichnet, dass** an einer einzigen Vorrichtung (10) zwei Zweiräder (11) an gegenüberliegenden Seiten (13) der Vorrichtung (10) anordbar sind und alle Bauteile der Vorrichtung (10) gegengleich zueinander angeordnet sind.

10. System nach einem der Ansprüche 1 bis 9, **dadurch gekennzeichnet, dass** die Vorrichtung (10) eine Nummerierung oder Kennung (12) aufweist.

11. Verfahren zum gleichzeitigen Sichern und Laden von insbesondere elektrisch betriebenen Zweirädern (11) wie E-Bikes, E-Scootern u.dgl. an einem System gemäß einem oder mehreren der Ansprüche 1 bis 10, umfassend folgende Schritte:
- Anzeige von freien und verfügbaren Vorrichtungen (10) über das Bedienpanel
- Auswahl einer gewünschten Vorrichtung (10) durch eine Bedienperson oder Zuweisung einer Vorrichtung (10) an die Bedienperson
- Kommunikation des Identifikationsgebers der Bedienperson mit dem Bedienpanel
- Freischaltung und Personalisierung der ausgewählten Vorrichtung (10) für die Bedienperson
- Sicherung des Zweirades der Bedienperson an der Vorrichtung (10) durch Führen der Sicherungseinrichtung (30) durch bzw. um das Zweirad (11) oder einzelne Bauteile des Zweirads (11), Einbringen der Sicherungseinrichtung (30) in das Verschlusselement (23) und Herbeiführung der Sicherungslage.

12. Verfahren nach Anspruch 11, **dadurch gekennzeichnet, dass** zum Entsichern des Zweirades (11) folgende Schritte durchgeführt werden:
- Kommunikation des Identifikationsgebers der Bedienperson mit dem Bedienpanel
- Entpersonalisierung der ausgewählten Vorrichtung (10) und Verbringung des Verschlusselements (23) in die Freigabelage
- Entnahme der Sicherungseinrichtung (30) aus dem Verschlusselement (23).

13. Verfahren nach einem der Ansprüche 11 oder 12, **dadurch gekennzeichnet, dass** an der Vorrichtung (10) eine Signalleuchte (41) vorgesehen ist, die nach der Freischaltung der Vorrichtung (10) und/oder nach der Herbeiführung der Sicherungslage und/oder nach der Herbeiführung der Freigabelage ein Lichtsignal abgibt.

## Claims

1. System for securing and charging especially electrically operated two-wheeled vehicles (11) such as e-bikes, e-scooters and the like with a plurality of devices (10) which can be used for parking and charging the electrically operated two-wheeled vehicles (11)
with each of the devices (10) having at least one abutment area (22) against which the two-wheeled vehicle (11) can be leaned while it remains there, and having at least one charging port (40) on each of the devices (10) at which the accumulator of the two-wheeled vehicle (11) can be charged while it remains on the device (10),
with at least one securing device (30) which cannot be released arranged on each of the devices (10) and which secures the two-wheeled vehicle (11) against theft, with the securing device (30) being arranged as an elongated element in the device (10) as long as it is not in use, one end (31) of the securing device (30) being withdrawable from the device (10) for securing the two-wheeled vehicle (11) and the other end (32) of the securing device (30) being fixed in a non-releasable manner in the device (10)
wherein a closure element (23) is provided, into which one end (31) of the securing device (30) can be inserted and secured there after the securing device (30) has been guided through or around the two-wheeled vehicle (11) or individual components of the two-wheeled vehicle (11),
wherein the closure element (23) has a release position in which the one end (31) of the securing device (30) can be inserted into and/or removed from the closure element (23), and a securing position in which the one end (31) of the securing device (30) is secured in the closure element (23) against removal,
wherein an element (36) with a projection (33) is provided at one end (31) of the securing device (30), with a projection (33) that can be engaged around or behind by the closure element (23) in order to bring about the securing position and to secure the two-wheeled vehicle (11) to the device (10) with the interposition of the projection (33), wherein the closure element (23) can be electronically locked and/or unlocked
and wherein a common control panel is provided to manage the plurality of devices (10) together,
**characterised**
**in that** an individual device (10) is assigned to an operator via the operating panel and can be freely switched and personalised for the operator,
**in that** the closure element (23) of this device (10) is thereby brought into its release position,
and **in that** the element (36), when inserted into the closure element (23), actuates a switch (37) and thereby brings the closure element (23) into its securing position.

2. System according to claim 1, **characterised in that** the communication with the control panel and/or the personalisation of an individual device (10) for an operator is performed by means of an identification device, namely by means of an electronic device, such as a cell phone, a smartphone, a tablet or a similar object or by means of a magnetic or chip card or by means of a transponder.

3. System according to any one of claims 1 or 2, **characterised in that** the securing device (30) is automatically pulled into the device (10) when not subjected to an external force.

4. System according to claim 3, **characterised in that** the securing device (30) is pulled into the device (10) by means of a weight (34) or spring located on a pulley (35) or the like.

5. System according to any one of claims 1 to 4, **characterised in that** each of said devices (10) comprises at least one signalling device such as a signal light (41) capable of emitting light signals and/or other signals.

6. System according to any one of claims 1 to 5, **characterised in that** a standard household socket serves as the charging connection (40) on the device (10).

7. System according to any one of claims 1 to 6, **characterised in that** the abutment area (22) of the device (10) consists at least in areas of a soft material.

8. System according to one of claims 1 to 7, **characterised in that** the device (10) comprises a frame (14) and a housing (20) surrounding the frame (14) at least in regions, and **in that** at least one recess (25) is provided in the frame (14), in particular in its foot area (24), through which electrical lines can be guided.

9. System according to any one of claims 1 to 8, **characterised in that** two two-wheeled vehicles (11) can be arranged on a single device (10) on opposite sides (13) of the device (10) and all components of the device (10) are arranged opposite to each other.

10. System according to any one of claims 1 to 9, **characterised in that** the device (10) comprises a numbering or identifier (12).

11. Method for simultaneously securing and charging in particular electrically operated two-wheeled vehicles (11) such as e-bikes, e-scooters and the like on a system according to one or more of claims 1 to 10, comprising the following steps:
- Display of free and available fixtures (10) via the operating panel
- Selection of a desired device (10) by an operator or assignment of a device (10) to the operator
- Communication of the operator's identification transmitter with the control panel
- Activation and personalisation of the selected device (10) for the operator
- Securing the operator's two-wheeled vehicle to the device (10) by guiding the securing device (30) through or around the two-wheeled vehicle (11) or individual components of the two-wheeled vehicle (11), inserting the securing device (30) into the closure element (23) and bringing about the securing position.

12. The method according to claim 11, **characterised in that** the following steps are performed to unlock the two-wheeled vehicle (11):
- Communication of the operator's identification transmitter with the control panel
- Depersonalisation of the selected device (10) and bringing the closure element (23) into the release position
- Removal of the securing device (30) from the closure element (23).

13. Method according to one of claims 11 or 12, **characterised in that** a signal light (41) is provided on the device (10), which emits a light signal after the device (10) has been released and/or after the securing position has been brought about and/or after the release position has been brought about.

## Revendications

1. Système de fixation et de recharge notamment des deux-roues électriques (11) tels que les vélos électriques, les scooters électriques et similaires, avec une pluralité de dispositifs (10) pouvant servir à déposer et recharger les deux-roues (11) à traction électrique,
sachant que chacun des dispositifs (10) présente au moins une zone de mise en appui (22) contre laquelle le deux-roues (11) peut être mis en appui pendant son séjour à cet endroit, et au moins un port de recharge (40) sur chacun des dispositifs (10) contre lequel la batterie du deux-roues (11) peut être rechargée pendant qu'il séjourne contre le dispositif (10),
avec respectivement au moins un dispositif de fixation (30) disposé de manière indétachable contre chacun des dispositifs (10) et qui sécurise le deux-roues (11) contre le vol, sachant que le dispositif de sécurisation (30) est disposé sous forme d'élément de forme oblongue dans le dispositif (10) tant qu'il n'est pas utilisé, sachant qu'une extrémité (31) du dispositif de fixation (30) peut être extraite du dispositif (10) pour fixer le deux-roues (11), et que l'autre extrémité (32) du dispositif de fixation (30) est immobilisé dans le dispositif (10) de façon indétachable,
sachant qu'est prévu un élément de fermeture (23) dans lequel il est possible d'introduire une extrémité (31) du dispositif de fixation (30) et de le fixer à cet endroit, après que le dispositif de fixation (30) a été passé à travers et/ou autour du deux-roues (11) ou de composants individuels du deux-roues (11),
sachant que l'élément de fermeture (23) dispose d'une position d'autorisation dans laquelle l'extrémité (31) du dispositif de fixation (30) peut être introduite dans l'élément de fermeture (23) et/ou peut être retirée de cet élément, et d'une position de fixation dans laquelle l'extrémité (31) du dispositif de fixation (30) est fixée dans l'élément de fermeture (23) pour empêcher un retrait,
sachant qu'à l'extrémité (31) du dispositif de fixation (30) est prévu un élément (36) présentant une saillie (33) que l'élément de fermeture (23) peut ceinturer ou saisir par l'arrière afin de générer la position de fixation et pour fixer le deux-roues (11) contre le dispositif (10) par intercalage de la saillie (33), sachant que l'élément de fermeture (23) est verrouillable et/ou déverrouillable électroniquement
et sachant qu'un panneau de commande commun est prévu pour administrer ensemble la pluralité de dispositifs (10),
**caractérisé en ce que**
via le panneau de commande un dispositif individuel (10) peut être attribué à un utilisateur et qu'il peut être débloqué et personnalisé pour cet utilisateur,
au cours de cette opération l'élément de fermeture (23) de ce dispositif (10) est amené sur sa position d'autorisation
et **en ce que** l'élément (36), lors de l'introduction dans l'élément de fermeture (23), actionne un interrupteur (37) et amène ainsi l'élément de fermeture (23) dans sa position de fixation.

2. Système selon la revendication 1, **caractérisé en ce que** la communication avec le panneau de commande et/ou la personnalisation d'un dispositif individuel (10) pour un utilisateur est effectuée au moyen d'un transmetteur d'identification, à savoir au moyen d'un appareil électronique comme un téléphone portable, un smartphone, une tablette ou un objet similaire, ou au moyen d'une carte magnétique ou à puce, ou au moyen d'un transpondeur.

3. Système selon l'une des revendications 1 ou 2, **caractérisé en ce que** le dispositif de fixation (30) est automatiquement tiré dans le dispositif (10) si une force ne s'exerce pas sur lui de l'extérieur.

4. Système selon la revendication 3, **caractérisé en ce que** le dispositif de fixation (30) est tiré dans le dispositif (10) au moyen d'un poids (34) situé contre un galet de renvoi (35) ou similaire ou par un ressort.

5. Système selon l'une des revendications 1 à 4, **caractérisé en ce que** chacun des dispositifs (10) présente au moins un dispositif de signalisation comme un voyant lumineux (41) qui peut émettre des signaux lumineux et/ou d'autres signaux.

6. Système selon l'une des revendications 1 à 5, **caractérisé en ce qu'**une prise domestique courante sert de port de connexion (40) au dispositif (10).

7. Système selon l'une des revendications 1 à 6, **caractérisé en ce que** la zone de mise en appui (22) du dispositif (10) est, au moins localement, en matériau mou.

8. Système selon l'une des revendications 1 à 7, **caractérisé en ce que** le dispositif (10) comprend un cadre (14) et un boîtier (20) entourant au moins localement le cadre (14), et que dans le cadre (14), notamment dans la zone de son piètement (24), est prévu au moins un évidement (25) dans lequel peuvent passer des lignes électriques.

9. Système selon l'une des revendications 1 à 8, **caractérisé en ce que** deux deux-roues (11) peuvent être disposés contre un seul dispositif (10), sur les côtés (13) se faisant face du dispositif (10), et que tous les composants du dispositif (10) sont disposés symétriquement les uns par rapport aux autres.

10. Système selon l'une des revendications 1 à 9, **caractérisé en ce que** le dispositif (10) présente une numérotation ou un identifiant (12).

11. Procédé pour la fixation et la recharge simultanées notamment de deux-roues (11) à traction électrique tels que des vélos électriques, scooters électriques et similaires contre un système selon l'une ou plusieurs des revendications 1 à 10, comprenant les étapes suivantes :
- Affichage de dispositifs (10) libres et disponibles via le panneau de commande
- Sélection d'un dispositif (10) souhaité par un utilisateur ou attribution d'un dispositif (10) à l'utilisateur
- Communication entre le générateur d'identification de l'utilisateur et le panneau de commande
- Déblocage et personnalisation du dispositif sélectionné (10) pour l'utilisateur
- Fixation du deux-roues de l'utilisateur contre le dispositif (10), en faisant passer le dispositif de fixation (30) à travers ou autour du deux-roues (11) ou de composants individuels du deux-roues (11), introduction du dispositif de fixation (30) dans l'élément de fermeture (23) et génération de la position de fixation.

12. Procédé selon la revendication 11, **caractérisé en ce que** le détachement du deux-roues (11) passe par les étapes suivantes :
- Communication entre le générateur d'identification de l'utilisateur et le panneau de commande
- Dépersonnalisation du dispositif (10) sélectionné et retour de l'élément de fermeture (23) sur la position d'autorisation
- Retrait du dispositif de fixation (30) hors de l'élément de fermeture (23).

13. Procédé selon l'une des revendications 11 ou 12, **caractérisé en ce que** contre le dispositif (10) est prévu un voyant lumineux (41) qui émet un signal lumineux après le déblocage du dispositif (10) et/ou après la génération de la situation de fixation et/ou après la génération de la situation d'autorisation.
